# EUROPÄISCHE PATENTSCHRIFT

(11) **EP 3 657 286 B1**
(45) Veröffentlichungstag und Bekanntmachung des Hinweises auf die Patenterteilung: **06.01.2021**
(21) Anmeldenummer: 19206083.8
(22) Anmeldetag: 30.10.2019
(51) Int. Cl.: G05B 19/418, H04L 12/28

(54) **VERFAHREN ZUM EINRICHTEN EINES ANSTEUERGERÄTES IN EINEM GEBÄUDEINSTALLATIONSNETZWERK**
METHOD FOR CONFIGURING AN ACTUATOR DEVICE IN A BUILDING AUTOMATION SYSTEM
PROCÉDÉ DE RÉGLAGE D'UN APPAREIL DE COMMANDE DANS UN RÉSEAU D'INSTALLATIONS DE BÂTIMENT

(30) Priorität: 26.11.2018 DE 102018129678
(43) Veröffentlichungstag der Anmeldung: 27.05.2020
(73) Patentinhaber: Insta GmbH, 58509 Lüdenscheid (DE)
(72) Erfinder: Sangermann, Marc, 44229 Dortmund (DE); Neuhaus, Stefan, 44289 Dortmund (DE); Groll, Roland, 58507 Lüdenscheid (DE); Steins, Stephan, 44149 Dortmund (DE); Donat, Matthias, 58553 Halver (DE)

(56) Entgegenhaltungen:
- DE-U1-202014 104 933
- US-A1- 2015 015 165

## Beschreibung

Die Erfindung betrifft ein Verfahren zum Einrichten eines Ansteuergerätes als Teilnehmer in einem Gebäudeinstallationsnetzwerk.

Gebäudeinstallationsnetzwerke umfassen eine Mehrzahl an Aktoren und Ansteuergeräten, wobei ein Nutzer mittels der Ansteuergeräte die Aktoren ansteuern kann. Ansteuerbare Aktoren können dabei Leuchten, Musikanlagen oder dergleichen sein, letztendlich jedes elektrische Gerät, welches in das Gebäudeinstallationsnetzwerk unmittelbar oder mittelbar eingebunden ist. Ziel eines Gebäudeinstallationsnetzwerkes ist es, möglichst alle gebäudeseitig installierten Aktoren in dem Netzwerk zu organisieren, damit diese zentral verwaltet werden können. Zur Ansteuerung von Aktoren in einem Gebäudeinstallationsnetzwerk werden vielfach Bedienpaneele mit einer graphischen, oftmals berührungssensitiven Oberfläche eingesetzt, mit denen die Aktoren angesteuert werden können. Über ein solches Bedienpaneel hat ein Nutzer eine große Auswahlmöglichkeit Aktoren anzusteuern. Je mehr Aktoren zum Ausüben unterschiedlicher Aktionen ansteuerbar sind, je komplexer ist typischerweise die Menüführung. Eine andere Möglichkeit, Aktoren in einem Netzwerk anzusteuern, sind speziell für einzelne Aktoren ausgebildete Bediengeräte mit mitunter mehreren manuell betätigbaren Schaltsensoren, über die bestimmte Aktionen des einen speziellen Aktors ausgelöst werden können.

Eingerichtet werden diese Gebäudeinstallationsnetzwerke zentral über ein für die Zwecke des Einrichtens in das Gebäudeinstallationsnetzwerk eingebundenes Computersystem. Im Zuge einer solchen Einrichtung werden manuell durch eine einrichtende Person mögliche Ansteuerungen für einen Aktor festgelegt und Befehle programmiert, mit denen der Aktor angesteuert werden kann. Diese Befehle werden typischerweise in einer Zentrale gespeichert und auf Anforderung ausgeführt. Zu dieser Einrichtung gehört es auch, den jeweiligen Aktoren ein oder mehrere Sensoren zuzuordnen, bei deren Betätigung eine Aktoraktion ausgelöst wird. Hierbei kann es sich um die bereits vorbeschriebenen Bedienpaneels handeln. Eine solche Einrichtung ist aufgrund der Komplexität - auch aufgrund des Einrichteprogramms selbst - nur von geschulten Personen möglich.

Die Einrichtung eines solchen Gebäudeinstallationsnetzwerkes erfolgt zentral. Werden Netzwerkteilnehmer hinzugefügt, müssen diese in derselben Art und Weise in das Netzwerk eingebunden werden.

Bekannt sind auch proprietäre Netzwerke, die bereits eingerichtet erworben werden, mithin eine Basisstation und mehrere Teilnehmer umfassen. Eine Einrichtung eines solchen proprietären Netzwerkes ist nicht erforderlich. Ein solches Netzwerk ist allerdings auf die herstellerspezifischen Teilnehmer beschränkt.

Die US 2015/015165 A1 zeigt ein Verfahren zum Konfigurieren eines Bedienfelds, wobei Eigenschaften des Bedienfelds, insbesondere mögliche Betätigungsevents an einem Mobilgerät erfasst und von einem Benutzer gewünschten Beleuchtungsaktionen zugeordnet werden können.

Die DE 20 2014 104933 U1 zeig eine Steuereinheit mit einer Basis, die zum Ansteuern von Aktoren notwendige API Kommandos enthält.

Vor dem Hintergrund zunehmender Gebäudeautomatisierung und des Einbringens einer Vielzahl von elektrischen Geräten in ein solches Netzwerk besteht der Wunsch, in einfacher Weise ein solches Netzwerk einrichten zu können, sodass dieses von jedermann durchgeführt werden kann, und insbesondere die Möglichkeit eröffnet ist, in das Gebäudeinstallationsnetzwerk Netzwerkteilnehmer unterschiedlicher Hersteller einbinden zu können. Darüber hinaus wäre es wünschenswert, wenn eine Betätigung von Aktoren in einfacher Weise und ohne unterschiedliche Menüebenen durchlaufen zu müssen, in herkömmlicher Weise angesteuert werden könnten. Der Erfindung liegt daher die Aufgabe zu Grunde, ein Verfahren zum Einrichten eines Ansteuergerätes in einem solchen Gebäudeinstallationsnetzwerk vorzuschlagen, damit den vorstehenden Wünschen Rechnung getragen wird.

Gelöst wird diese Aufgabe durch ein eingangs genanntes, gattungsgemäßes Verfahren, welches mit folgenden Schritte ausgeführt wird:
- Ermitteln des wenigstens einen in das Gebäudeinstallationsnetzwerk eingebundenen Aktors durch das Ansteuergerät,
- Abrufen wenigstens eines Datensatzes zu dem wenigstens einen ermittelten Aktor von einem Zentralserver über das Internet mittels des Internetgateways durch das Ansteuergerät, wobei der Datensatz zumindest einen Roh-API-Befehl, einen Algorithmus, mit dem der Roh-API-Befehl zu einem ausführbaren API-Befehl individualisiert werden kann, und Angaben zu der Aktion, die der Aktor bei Ansteuerung durch den API-Befehl ausführt, umfasst,
- Senden von Information betreffend den zumindest einen Aktor, von Angaben zu der zumindest einen, jeweilig möglichen Aktion des zumindest einen Aktors und von durch das Ansteuergerät erkennbaren Betätigungsevents seines zumindest einen manuell betätigbaren Schaltsensors an das Anzeigegerät durch das Ansteuergerät,
- Anzeigen der Information, der Angaben sowie durch das Ansteuergerät erkennbare Betätigungsevents seines zumindest einen manuell betätigbaren Schaltsensors auf dem Anzeigegerät,
- nutzerseitiges Zuordnen zumindest einer bezüglich des wenigstens einen Aktors ausführbaren Aktion zu einem durch das Ansteuergerät erkennbaren Betätigungsevent,
- Senden der Zuordnung an das Ansteuergerät,
- Individualisieren des zumindest einen der zugeordneten Aktion entsprechenden Roh-API-Befehls durch Bilden eines ausführbaren API-Befehls unter Verwendung des dem Roh-API-Befehl zugehörigen Algorithmus durch das Ansteuergerät,
- Speichern des individualisierten API-Befehls in einem Speicher des Ansteuergeräts.

Das Einrichten eines Ansteuergeräts erfolgt gemäß diesem Verfahren dezentral über das Ansteuergerät selbst. In das Gebäudeinstallationsnetzwerk können zahlreiche derartige Ansteuergeräte dezentral angeordnet sein. Beispielsweise kann es sich bei dem Ansteuergerät um ein Bediengerät mit wenigstens einem manuell betätigbaren Schaltsensor zum Auslösen einer Aktoraktion handeln. Zum Zwecke der Einrichtung ermittelt das Ansteuergerät zunächst die in dem Gebäudeinstallationsnetzwerk eingebundenen Aktoren. Das Gebäudeinstallationsnetzwerk ist vorzugsweise ein IP-Netzwerk. Die Gebäudeinstallationsnetzwerkteilnehmer können dann untereinander über LAN oder über WLAN und somit über ein typischerweise ohnehin vorhandenes Netzwerk in das Gebäudeinstallationsnetzwerk eingebunden sein. Das LAN oder WLAN kann auch das Gebäudeinstallationsnetzwerk selbst sein. Vorteilhaft bei einer solchen Ausgestaltung ist, dass ein solches Netzwerk üblicherweise bereits im Gebäude integriert ist. Darüber hinaus ist am Markt eine große Bandbreite an elektrischen Geräten erhältlich, mit denen ein IP-Netzwerk einfach aufgebaut werden kann. Vorteilhafterweise wird das ohnehin in einem Gebäude vorhandene Netzwerk als Gebäudeinstallationsnetzwerk genutzt, um die benötigte Kommunikation zwischen den Gebäudeinstallationsnetzwerkteilnehmern zu ermöglichen. Bei einer solchen Ausgestaltung kann in dieses Netzwerk auch eine Schnittstelle zu einem Gebäudeinstallationsbus eingebunden sein.

Ein solches Gebäudeinstallationsnetzwerk kann gemäß einer möglichen Ausgestaltung durch eine Basisstation (Gateway) administriert sein. Mittels dieser Basisstation (Gateway) werden Aufgaben ausgeführt, mit denen beispielsweise Adressen eindeutig vergeben werden, mit denen Gebäudeinstallationsnetzwerkteilnehmer angesprochen werden können. Auch besteht die Möglichkeit in der Basisstation (Gateway) eine Übersetzungsliste zu hinterlegen, in der zum Einen die spezielle Adresse eines Gebäudeinstallationsnetzwerkteilnehmers und zum Anderen ein eindeutiger, auch herstellerseitig vergebbarer Name, etwa eines Aktors hinterlegt ist, wobei zwischen der Adresse und dem Namen eine Zuordnung gegeben ist. Das Netzwerk ist dann invariant gegenüber etwaigen Adressänderungen, die durch ein Neuanmelden der Gebäudeinstallationsnetzwerkteilnehmer in dem Gebäudeinstallationsnetzwerk entstehen können. Hierdurch wird eine sichere Einrichtung gewährleistet, die ohne zusätzliche Nutzereingriffe, bei denen der Nutzer spezielles Fachwissen aufbringen muss, auskommt.

Das Ermitteln der Gebäudeinstallationsnetzwerkteilnehmer durch das Ansteuergerät kann über ein an sich bekanntes Scannen des Gebäudeinstallationsnetzwerkes erfolgen, wobei durch einen solchen Scanvorgang zunächst alle Netzwerkteilnehmer erfasst werden. Aus diesen werden die ansteuerbaren Aktoren mit Hilfe von diesen Aktoren zugehörigen Attributen ermittelt. Diese Attribute sind herstellerseitig den Aktoren zugewiesen. Diese Attribute werden auf eine standardisierte Abfrage hin einem fragendem Netzwerkteilnehmer zur Verfügung gestellt.

Zu den durch den Scanvorgang ermittelten Aktoren werden von einem Zentralserver über das Internet mittels eines in das Gebäudeinstallationsnetzwerk eingebundenen Internetgateways Datensätze abgerufen. Die Internetverbindung zu dem Zentralserver ist vorzugsweise eine gesicherte Internetverbindung, beispielsweise eine https-Verbindung.

Ein von dem Zentralserver abgerufener Datensatz umfasst:
(i) Einen Roh-API-Befehl,
(ii) einen Algorithmus, mit dem der Roh-API-Befehl zu einem ausführbaren API-Befehl individualisiert werden kann, und
(iii) Angaben zu der Aktion, die der Aktor bei Ansteuerung durch den API-Befehl ausführt.

Ein Datensatz kann weitere Informationen zu dem Aktor umfassen.

API-Befehle sind Befehle, mit denen ein Aktor angesteuert werden kann, wobei API-Befehle vom dem Hersteller eines Aktors zur Verfügung gestellt werden. Mit diesen API-Befehlen können Aktoren standardisiert zum Ausführen einer Aktion veranlasst werden, ohne dass zusätzlicher Programmieraufwand erforderlich ist. Ein ausführbarer API-Befehl besteht beispielsweise aus der Adresse des anzusteuernden Aktors, sowie zumindest einem Befehlswort. Dieses Befehlswort kann um zusätzliche Attribute oder weitere Befehlswörter erweitert werden. Mit Hilfe dieser Zusätze können spezielle Ausgestaltungen einer Aktoraktion realisiert werden, wie zum Beispiel die Angabe eines bestimmten Helligkeitswertes (Dimmwertes) einer Leuchte. Es versteht sich, dass die Möglichkeiten, die mit Hilfe einer solchen Struktur für eine Ansteuerung des Aktors geschaffen werden, eine weite Bandbreite von auszuführenden Aktionen eines Aktors abdecken.

Abgerufen wird von dem Zentralserver ein Roh-API-Befehl. Hierbei handelt es sich noch nicht um einen ausführbaren API-Befehl, da zumindest die Adresse des anzusteuernden Aktors oder ein zu setzender Aktorzustand in diesem noch nicht enthalten ist. Unter einem Roh-API-Befehl wird im Rahmen dieser Ausführungen die grundlegende Befehlsstruktur eines API-Befehls verstanden. In diesem können Platzhalter für bestimmte Angaben, zum Beispiel der Adresse des anzusteuernden Aktors und/oder Attribute vorhanden sein. Zu diesen Attributen zählen auch individuelle, nutzerbezogene Befehle zu einem Aktor, beispielsweise ein prozentualer Helligkeitswert. Der von dem Zentralserver abgerufene Roh-API-Befehl kann bereits so weit aufbereitet sein, dass dieser nur bestimmte Attribute und nicht sämtliche möglichen Attribute des Aktors umfasst. Hierdurch ist eine Möglichkeit geschaffen, Nutzern eine bezüglich der Anzahl möglicher Attribute getroffene Vorauswahl anzubieten. Hierzu wird man die Attribute auswählen, die Nutzer mit hoher Wahrscheinlichkeit nutzen werden. Grundsätzlich mit dem Aktor ausführbare, jedoch nur selten oder nur in Spezialfällen genutzte Attribute werden dann nicht angeboten, was die Übersichtlichkeit beim Einrichten erleichtert.

Mit Hilfe des mit dem Roh-API-Befehl abgerufenen Algorithmus kann der Roh-API-Befehl zu einem ausführbaren API-Befehl individualisiert werden. Auf diese Weise wird für jeden API-Befehl eine maschinenlesbare Beschreibung mit der Information geliefert, welche Attribute prinzipiell eingesetzt werden können bzw. angeboten werden und an welcher Stelle diese Attribute in den Roh-API-Befehl einzusetzen sind. Dieser Algorithmus ist durch das Ansteuergerät lesbar. Das Ansteuergerät kann hierzu auch nutzerbezogene Eingaben und/oder netzwerkbezogene Informationen ermitteln und/oder auswerten. In einer bevorzugten Ausgestaltung ist für jeden in dem Roh-API-Befehl vorhandenen Platzhalter eine Definition desselben in dem Algorithmus vorhanden. Die einzusetzenden Attribute können dabei Boole'sche Attribute oder auch nicht-Boole'sche Attribute, wie beispielsweise einen prozentualen Helligkeitswert, darstellen. Informationen zu dem entsprechenden Datentyp, etwaigen Grenzen oder Konvertierungen etc. können in dem Algorithmus vorhanden sein. Mit Hilfe des Algorithmus kann der Roh-API-Befehl zu einem ausführbaren API-Befehl individualisiert werden. Hierzu werden die entsprechenden Attribute an entsprechender Stelle gesetzt und der Roh-API-Befehl wird um eine Adressangabe des anzusteuernden Aktors ergänzt.

Durch die Angaben zu der Aktion, die der Aktor durch den API-Befehl ausführen soll ist darüber hinaus eine prinzipielle Information gegeben, wie sich der Aktor bei Ansteuerung mit dem API-Befehl verhält, mithin: Welche Aktion er ausführt und/oder welchen Zustand er einnimmt bzw. einnehmen kann. Diese Angaben sind für einen Nutzer eine Hilfestellung, welchen API-Befehl er für eine gewünschte Ansteuerung auswählen muss. Eine solche Angabe kann beispielsweise der prinzipielle Hinweis sein, dass mit Hilfe des dieser Angabe zugeordneten API-Befehls der Helligkeitswert einer Leuchte auf einen bestimmten Wert gesetzt wird. Diese Angaben können auf dem Zentralserver in einer natürlichen Sprache oder in einer theoretischen Sprache abgelegt sein, die standardisiert in eine natürliche Sprache umgewandelt werden kann. Unter einer natürlichen Sprache ist dabei eine Sprache zu verstehen, in der sich eine Menschengruppe verständigen kann, mithin Deutsch, Englisch, Französisch etc. Unter einer theoretischen Sprache sind erdachte Sprachkonstrukte zu verstehen, beispielsweise Programmiersprachen oder Sprachen, die aus zusammengesetzten Abkürzungen bestehen.

Nach dem Abrufen der Datensätze zu den ermittelten Aktoren von dem Zentralserver werden Informationen zu diesen Aktoren und die abgerufenen Angaben zu den Roh-API-Befehlen an ein Anzeigegerät durch das Ansteuergerät, etwa über eine Funkverbindung, gesendet. Neben dieser aktorbezogenen Information werden durch das Ansteuergerät erkennbare Betätigungsevents seines zumindest einen manuell betätigbaren Schaltsensors an das Ansteuergerät übermittelt. Ein solches Betätigungsevent ist eine Kodierung einer bestimmten Betätigung des Schaltsensors. Typischerweise handelt es sich bei diesem um einen tastend arbeitenden Schaltsensor, sodass ein erstes Betätigungsevent beispielsweise eine Kurzdruck-Betätigung, eine weitere eine Langdruck-Betätigung ist oder wieder ein weiteres Betätigungselement eine Mehrfach-Betätigung in einer bestimmten Abfolge und/oder in einer bestimmten Zeitspanne darstellt. Ein solches Bestätigungsevent kann auch über einen Bewegungsmelder ausgelöst werden, etwa wenn erkannt wird, dass eine Person in einen Raum eintritt bzw. den Bewegungsmelder passiert hat. Diese Bestätigungsevents sind von dem Ansteuergerät erkennbar. Der ein Betätigungsevent auslösende Sensor kann Teil des Ansteuergerätes sein, mithin mit diesem in einem Bauteil vereint sein. Möglich ist es auch, dass dieser Sensor über eine Kommunikation, beispielsweise über Funk mit dem Ansteuergerät verbunden ist. Eine Verbindung zwischen Ansteuergerät und Sensor kann beispielsweise über ein Funknetzwerk (beispielsweise Bluetooth®, ZigBee®, etc.) mit einem proprietären Protokoll oder mittels einer festen Verdrahtung eingerichtet sein.

Das Ansteuergerät kann Teil einer Basisstation sein, die mit einer Vielzahl von Sensoren verbunden sind.

Diese Information - die Information zu den Aktoren, die Angaben zu den API-Befehlen und die erkennbaren Betätigungsevents - werden auf dem Anzeigegerät angezeigt, mithin für einen Nutzer visualisiert. Hierzu werden die von dem Ansteuergerät empfangenen Datensätze an das Anzeigegerät übertragen. Das Anzeigegerät verfügt typischerweise über ein graphisches Display. Möglich ist auch eine Ausgestaltung, bei der mit vordefinierten, fest installierten Piktogrammen gearbeitet wird. In einer bevorzugten Ausgestaltung ist das Anzeigegerät ein Smartphone oder ein Tablet, also: ein in den meisten Fällen ohnehin vorhandenes Gerät. Mit der Benutzung eines solchen Gerätes ist der Nutzer vertraut. Darüber hinaus weist ein Smartphone Mittel auf, mit denen ein Nutzer Eingaben machen kann, meist einen Touchbildschirm. Das Anzeigegerät ist zum Zwecke der Einrichtung des Gebäudeinstallationsnetzwerkes in diesem angemeldet, und zwar zum Zuordnen eines Ansteuergerätes zu einem oder mehreren Aktoren. Wird als Gebäudeinstallationsnetzwerk ein IP-Netzwerk verwendet, ist das als Anzeigegerät eingesetzt Smartphone oder Tablet typischerweise in dieses IP-Netzwerk über WLAN eingebunden. Eine entsprechende Funktionalität weist jedes Smartphone oder Tablet auf. Wenn die ohnehin vorhandene Netzwerkinfrastruktur genutzt wird, ist der Aufbau einer eigenen Kommunikationsverbindung zwischen Anzeigegerät und Ansteuergerät nicht mehr erforderlich.

Prinzipiell verfügt ein solches Anzeigegerät ebenfalls über Mittel, mit denen ein Nutzer Eingaben tätigen kann. Eingabemöglichkeiten können beispielsweise haptische Tastsensoren oder ein Touchbildschirm sein. Sind die Information zu den Aktoren und die die API-Befehle beschreibenden Angaben auf dem Anzeigegerät angezeigt, ordnet ein Nutzer die Aktoren zusammen mit den gewünschten Aktionen einem durch das Ansteuergerät erkennbaren Betätigungsevent zu. Im Rahmen einer solchen Zuordnung können auch den API-Befehl individualisierende Attribute eingegeben werden. Ein beispielhaftes, mögliches Attribut kann der prozentuale Helligkeitswert einer Leuchte sein.

Der Nutzer ordnet die angezeigte Angabe einem durch das Ansteuergerät erkennbaren Betätigungsevent zu, bei einem tastend zu betätigenden Schaltsensor beispielsweise einem einmaligen kurzen Tastendruck oder einem Betätigungsevent, der aus mehreren Schaltsensorbetätigungen zusammengesetzt ist, beispielsweise drei kurze Tastbetätigungen.

Nachdem ein Nutzer eine durch einen Aktor auszuführende Aktion einem Betätigungsevent zugeordnet hat, wird diese Zuordnung von dem Anzeigegerät an das Ansteuergerät gesendet. Mit Hilfe des zuvor erwähnten, im Ansteuergerät abgelegten Algorithmus wird der Roh-API-Befehl - unter Berücksichtigung der durch den Nutzer zusätzlich ausgewählten Attribute - in dem Ansteuergerät individualisiert, mithin auf die speziellen Gegebenheiten in dem Gebäudeinstallationsnetzwerk und unter Berücksichtigung der Nutzerwünsche eingerichtet. Ein solcher individualisierter API-Befehl ist für den durch diesen angesprochenen Aktor ausführbar, da in dem Befehl die individuellen Informationen zu dem Gebäudeinstallationsnetzwerk enthalten sind, wie etwa die Adresse des anzusteuernden Aktors.

Nachdem der API-Befehl individualisiert ist, wird dieser in einem typischerweise nicht flüchtigen Speicher des Ansteuergerätes abgelegt. In einer bevorzugten Ausgestaltung ist der Speicher des Ansteuergerätes in mehrere Bereiche unterteilt, wobei jeder Bereich einem erkennbaren Betätigungsevent zugeordnet ist. Der individualisierte API-Befehl wird dann in dem dem gewählten Betätigungsevent zugeordneten Speicherbereich abgelegt. Die Speicherung von mehreren API-Befehlen kann auch in Tabellenform vorgenommen werden.

Wird ein Betätigungsevent ausgelöst, wird der diesem Bestätigungsevent zugehörige API-Befehl durch das Ansteuergerät in das Gebäudeinstallationsnetzwerk gesendet, woraufhin der zugeordnete Aktor entsprechend den während der Einrichtung vorgenommenen Vorgaben angesteuert wird.

Aufgrund der automatischen Individualisierung der Roh-API-Befehle sind für die Einrichtung keine Programmierkenntnisse erforderlich, da auf die herstellerseitigen Kenntnisse über einen Aktor zurückgegriffen wird. Es werden die ohnehin vorhandenen API-Befehle genutzt, um die Möglichkeiten der durch einen Aktor ausführbaren Aktionen auszuschöpfen. Aufgrund der Auslagerung der Anzeige- und Bedienfunktionalität auf das Anzeigegerät, also beispielsweise ein Smartphone, kann das Ansteuergerät einfach und kostengünstig ausgelegt sein. Ausgenutzt wird hierbei, dass die Anzeige- und Bedienfunktionalität nutzerseitig in Form beispielsweise eines Smartphones ohnehin vorhanden ist.

Eine besondere Vereinfachung in der Einrichtung liegt auch darin begründet, dass die Einrichtung dezentral für jedes Ansteuergerät durchgeführt wird. Insbesondere wenn das Ansteuergerät Teil eines ein oder mehrere manuell betätigbare Schaltsensoren aufweisenden Bediengerätes ist, braucht nicht aus einer Vielzahl von in das Netzwerk integrierten Sensoren eine Auswahl getroffen werden, wodurch die ansonsten erforderlichen Verknüpfungen zwischen Sensor und Aktor hinsichtlich der Anzahl signifikant reduziert ist.

In einer möglichen Weiterbildung ist die auf dem Zentralserver, dem zumindest einem Roh-API-Befehl zugeordnete, gespeicherte Angabe ein Zustand des Aktors. Ein solcher Zustand beschreibt das Ergebnis des Ansteuerns des Aktors, wenn er mit dem zugeordneten API-Befehl angesteuert wird. In einer Weiterbildung hierzu kann ein Aktor mit zwei unterschiedlichen, individualisierten und ausführbaren API-Befehlen so angesteuert werden, dass komplementäre Zustände erzeugt werden können. Diese Information über die Ansteuerbarkeit zu komplementären Zuständen ist in dem Zentralserver abrufbar hinterlegt. In einer Ausgestaltung kann das Ansteuergerät ferner komplementäre Betätigungsevents erkennen. Solche komplementären Betätigungsevents können beispielsweise das Betätigen eines Wippschalters oder das nochmalige Betätigen eines tastend arbeitenden Schaltsensors sein, etwa zum Ausführen einer komplementären Aktorfunktion, beispielsweise das Ausschalten einer Leuchte, wenn es sich bei dem anderen Betätigungsevent um das Einschalten derselben handelt. Auch das Betreten eines Raums durch einen Nutzer und das Verlassen dieses Raumes durch den Nutzer sind als komplementäre Betätigungsevents zu verstehen. Ordnet ein Nutzer im Schritt des Zuordnens ein Betätigungsevent, zu dem ein komplementäres Betätigungsevent existiert, einen API-Befehl zu, zu dem ein komplementärer API-Befehl existiert, kann gemäß einer Ausgestaltung dem Nutzer vorgeschlagen werden, den komplementären API-Befehl dem komplementären Betätigungsevent zuzuordnen. Nötig ist hierzu eine vorgeschaltete Auswertung der API-Befehle auf dem Zentralserver und Kenntnisse über die möglichen Betätigungsevents. Vorteilhafterweise kann so eine zielführende und den Nutzer unterstützende Vorauswahl getroffen werden, welche sinnvollen weitere API-Befehle genutzt werden können. Auf diese Weise ist eine Vereinfachung der Einrichtung möglich.

In einer weiteren Ausgestaltung ist von zumindest einem Aktor wenigstens ein, bereits individualisierter und ausführbarer API-Befehl abrufbar. Dieser wird dann nicht vom Zentralserver bezogen, sondern unmittelbar von dem Aktor. Nach dem Ermitteln der möglichen ansteuerbaren Aktoren wird dieser bereits ausführbare API-Befehle von dem ermittelten und/oder ausgewählten Aktor abgerufen und dem Nutzer während des Schrittes des Anzeigens zur Auswahl zu Verfügung gestellt. Dieser API-Befehl kann ein vorinstallierter API-Befehl sein, der durch einen Nutzer über eine andere, beispielsweise herstellerspezifische Oberfläche auf dem Aktor bereits individualisiert ist. So wird ein einfaches Aufgreifen der bereits vorhandenen, individualisierten API-Befehle gewährleistet. Dabei ist es für einen Nutzer unerheblich und er braucht auch keine Kenntniss darüber zu haben, ob ein solcher ausführbarer API-Befehl vom Aktor abgerufen worden ist oder das Ansteuergerät aus den vom Zentralserver abgerufenen Datensatz einen solchen bereitstellt.

In noch einer weiteren Ausgestaltung werden nach dem Ermitteln der in dem Gebäudeinstallationsnetzwerk angemeldeten, ansteuerbaren Aktoren und vor dem Abrufen der diesen Aktoren zugeordneten Datensätze von dem Zentralserver die ermittelten Aktoren an das Anzeigegerät gesendet. Ein Nutzer wählt dann aus der Mehrzahl der Aktoren zunächst einen Aktor aus, der bei Auslösung eines durch das Ansteuergerät erkennbaren Betätigungsevents angesteuert werden soll. Diese Information wird zunächst zurück an das Ansteuergerät gesendet, welches daraufhin nur die Datensätze zu diesem ausgewählten Aktor von dem Zentralserver abruft. Auf diese Weise kann der Datentransfer zwischen Ansteuergerät und Zentralserver reduziert werden, da nur Daten zu solchen Aktoren von dem Zentralserver abgerufen werden, die konkret angesteuert werden sollen. Hingegen werden Datensätze von im Gebäudeinstallationsnetzwerk eingebundenen Aktoren, die durch das Ansteuergerät nicht angesteuert werden sollen, nicht abgerufen.

In einer bevorzugten Ausgestaltung kann das Ansteuergerät in zwei Modi geschaltet werden. Diese beiden Modi sind zum Einen ein Einrichtemodus, zum Anderen ein Betriebsmodus. Das Ansteuergerät kann Anzeigemittel aufweisen, mit dem ein Nutzer darüber informiert wird, in welchem Modus sich das Anzeigegerät befindet. So kann etwa durch eine visuelle Rückmeldung dem Nutzer auf einfache Art und Weise mitgeteilt werden, ob das Ansteuergerät bereit ist, eingerichtet zu werden, oder ob dieses zunächst in seinen Einrichtemodus geschaltet werden muss.

In einer weiteren Ausgestaltung sind mehrere Aktoren in einem Subdatennetzwerk organisiert. Dieses Subdatennetzwerk ist typischerweise ein proprietäres, herstellerseitig definiertes Datennetzwerk. Dieses Subdatennetzwerk ist über eine Basisstation in das Gebäudeinstallationsnetzwerk eingebunden. Mit dieser Basisstation können die in dem Subdatennetzwerk angemeldeten Aktoren angesteuert werden. In der Basisstation werden ebenfalls die in das Gebäudeinstallationsnetzwerk gesendeten API-Befehle verarbeitet. Wird durch das Ansteuergerät ein API-Befehl gesendet, wird dieser durch die Basisstation des proprietären Subdatennetzwerkes empfangen und der entsprechende Aktor über das proprietäre Subdatennetzwerk, durchaus unter Verwendung eines anderen Protokolls angesteuert. Eine solche Basisstation verfügt hierzu bevorzugt über eine Übersetzungstabelle, wobei API-Befehlen spezielle, herstellerseitig definierte Befehle, mit denen die Aktoren angesteuert werden können, zugeordnet sind.

Im Folgenden ist ein dieses Verfahren ausführendes Bediengerät beschrieben, wobei das Ansteuergerät in dieses Bediengerät zusammen mit den das Ansteuergerät ansteuernden manuell betätigbaren Schaltsensoren integriert ist.

Ein solches Bediengerät für die Hausautomatisierung umfasst zumindest einen manuell betätigbaren ersten Schaltsensor und zumindest einen manuell betätigbaren zweiten Schaltsensor, welche wenigstens eine erste Schaltsensor zum Schalten einer gebäudetechnischen Installation vorgesehen ist und bei installiertem Bediengerät die elektrische Energieversorgung der gebäudetechnischen Installation schaltet, wobei das Bediengerät zur Stromversorgung seiner elektrischen Verbraucher vor der von dem ersten Schaltsensor geschalteten elektrischen Energieversorgung an diese angeschlossen ist, welches Bediengerät über ein Funkmodul sowie über einen elektronischen Speicher verfügt, in dem zumindest ein Befehl abgelegt ist, durch den ein in einem Gebäudeinstallationsnetzwerk eingebundener Aktor ansteuerbar ist, und durch welchen wenigstens einen zweiten Schaltsensor das Funkmodul zum Senden eines in dem Speicher abgelegten Befehls angesteuert ist.

Dieses Bediengerät verfügt über zumindest einen manuell betätigbaren ersten Schaltsensor und über zumindest einen manuell betätigbaren zweiten Schaltsensor. Der erste Schaltsensor dient zum konventionellen Schalten einer gebäudetechnischen Installation, beispielsweise einer Leuchte, einer Jalousie oder dergleichen und ist zu diesem Zweck in die elektrische Energieversorgung dieser gebäudetechnischen Installation mit seinem Schaltorgan eingeschaltet. Mithin kann durch diesen Schaltsensor diese gebäudetechnische Installation durch Schließen und Öffnen der Energieversorgung oder auch im Falle eines Dimmers durch Begrenzen des der gebäudetechnischen Installation zugeführten Stroms betätigt werden. Da dieser erste Schaltsensor mit seinem Schaltorgan in die elektrische Energieversorgung der zu schaltenden gebäudetechnischen Installation eingeschaltet ist, befindet sich das Bediengerät typischerweise an einer für einen Nutzer vertrauten Position innerhalb eines Raumes, so beispielsweise neben einer Tür. Das Einschalten des Schaltorgans des zumindest einen ersten Schaltsensors in die elektrische Energieversorgung der zu schaltenden gebäudetechnischen Installation wird bei diesem Bediengerät genutzt, um vor der geschalteten elektrischen Energieversorgung Strom für das Bediengerät abzuzweigen. Somit kann von der elektrischen Energieversorgung für den Betrieb des Bediengerätes elektrische Energie unabhängig von dem Schaltzustand des zumindest einen manuell betätigbaren ersten Schaltsensors gewonnen werden. Dieses gestattet die Ausrüstung des Bediengerätes mit elektrischen Stromverbrauchern, insbesondere auch solchen, die sich für einen Batteriebetrieb aufgrund höherer Leistung nicht eignen. Das Bediengerät verfügt beispielsweise als elektrischen Verbraucher über ein Funkmodul. Ferner verfügt das Bediengerät über einen elektronischen Speicher, in dem zumindest ein Befehl abgelegt ist, durch den ein in einem, beispielsweise in einem zuvor beschriebenen Gebäudeinstallationsnetzwerk eingebundener Aktor ansteuerbar ist. Zum Auslösen des Sendens eines Befehls an einen solchen Aktor dient der zumindest eine manuell betätigbare zweite Schaltsensor. In dem Speicher können verschiedene Befehle zum Ansteuern ein und desselben Aktors mit unterschiedlichen Befehlen oder auch Befehle zum Ansteuern unterschiedlicher Aktoren abgelegt sein. Auch die Hinterlegung von Befehlsverknüpfungen in dem Speicher sind möglich. Typischerweise verfügt das Bediengerät über eine Steuereinheit, die durchaus Teil des Funkmoduls sein kann, mit der unterschiedliche Betätigungen - Betätigungsevents - des zumindest einen zweiten Schaltsensors erkannt werden können. Typischerweise sind mehrere zweite Schaltsensoren vorgesehen, die eine zweite Schaltsensorengruppe bilden. Die Schaltsensoren sind typischerweise tastend ausgelegt. Sodann ist die Steuereinheit in der Lage, unterschiedliche Tastevents zu erkennen, beispielsweise eine Kurzdruck-Betätigung, eine Langdruck-Betätigung oder auch Kombinationen, wie beispielsweise eine mehrfache Kurzzeitbetätigung. Sind mehrere Schaltsensoren bei der zweiten Schaltsensorengruppe vorgesehen, beispielsweise zwei, ist die Steuereinheit in der Lage, auch kombinierte Betätigungen der Schaltsensoren zu detektieren, beispielsweise das gleichzeitige Betätigen der beiden Schaltsensoren. Jedem Betätigungsevent ist ein in dem Speicher abgelegter Befehl, bei dem es sich durchaus auch um eine Befehlskette handeln kann, zugeordnet.

Bei dem Schaltorgan des zumindest einen manuell betätigbaren ersten Schaltsensors kann es sich um das unmittelbar betätigte Schaltorgan handeln oder auch um einen Auslöser, durch den ein Relais zum eigentlichen Schalten der elektrischen Energieversorgung angesteuert wird.

Durch Konfigurieren des zumindest einen zweiten Schaltsensors zum Ansteuern zumindest eines in einem Gebäudeinstallationsnetzwerk eingebundenen Aktors, kann von diesem Schaltsensor jeder beliebige, in das Netzwerk eingebundene Aktor angesteuert werden. Dieser zumindest eine zweite Schaltsensor kann, da dieser lediglich zum Auslösen eines vorkonfigurierten Befehls dient, nicht nur einfach in seinem Aufbau gehalten sein, sondern ist überdies intuitiv wie bei einem gewöhnlichen Wandschalter bedienbar. Bei diesem Konzept macht man sich zunutze, dass ein Nutzer die sich ihm bei einem menügeführten Bedienpaneel ergebenden Einstellmöglichkeiten oftmals nicht mit der möglichen Diversität nutzt, sondern immer wieder auf dieselben Einstellungen zurückgreift. Dieses lässt sich mit dem erfindungsgemäßen Bediengerät durch Ablegen dieser gewünschten Aktoransteuerung in Form jeweils eines Befehls oder eines aus mehreren Einzelbefehlen bestehenden Befehls (einer Befehlskette), abgelegt in dem dem Bediengerät zugehörigen Speicher, einrichten. Der Nutzer greift anschließend durch Betätigung des zumindest einen zweiten manuell betätigbaren Schaltsensors auf diesen oder diese vorkonfigurierten Befehle zurück. Ist einem Betätigungsevent eine Befehlskette zugeordnet, durch die mehrere Aktoren, beispielsweise die Raumbeleuchtung, die Jalousien, die Musikanlage und dergleichen angesteuert werden, kann durch simple Betätigung des zweiten Schaltsensors ein bestimmtes Ambiente eingestellt werden.

Der Speicher ist in mehrere Speichersegmente bzw. Speicherbereiche unterteilt, wobei jedem Speicherbereich ein mögliches Betätigungsevent jedes Schaltsensors der zweiten Schaltsensorengruppe zugeordnet ist.

Bevorzugt ist das Bediengerät modular konzipiert und umfasst einen Einsatz und einen Aufsatz. Der Einsatz ist typischerweise in einen Unterputzträger eingesetzt. Dieser Einsatz ist in die elektrische Energieversorgung der gebäudetechnischen Installation eingeschaltet und umfasst das Schaltorgan zum Schalten der gebäudetechnischen Installation, beispielsweise einer Leuchte. Die weiteren vorbeschriebenen Komponenten des Bediengerätes sind in dem Aufsatz enthalten. Dieser ist mit dem Einsatz in an sich bekannter Weise mechanisch und elektrisch verbunden. Bei einer solchen Ausgestaltung schaltet der zumindest eine manuell betätigbare erste Schaltsensor die elektrische Energieversorgung der zu schaltenden gebäudetechnischen Installation nicht unmittelbar. Vielmehr ist als Schaltorgan zu diesem Zweck in dem Einsatz ein Relais verbaut. Dieses eröffnet die Möglichkeit, einen mittels eines Einsatzes und eines darauf montierten Aufsatzes realisierten herkömmlichen Wandschalter durch Austausch des Aufsatzes umzurüsten, damit dieser nach der Umrüstung neben dem zumindest einen manuell betätigbaren ersten Schaltsensor auch zumindest einen manuell betätigbaren zweiten Schaltsensor für die Ansteuerung eines über das Gebäudeinstallationsnetzwerk erreichbaren Aktors aufweist.

Gemäß einer ersten Ausgestaltung ist das Bediengerät mit einer Basisstation, mit der verschiedene in einem Gebäudeinstallationsnetzwerk organisierte Aktoren, typischerweise eines Hausautomatisierungssystems angesteuert werden können, über eine Funkverbindung verbunden. Das Funkmodul des Bediengerätes kommuniziert bei dieser Ausgestaltung nur mit der Basisstation, muss mithin nicht in das Gebäudeinstallationsnetzwerk eingebunden sein. Die Basisstation ist - genauso wie der durch das Bediengerät anzusteuernde Aktor - in das Gebäudeinstallationsnetzwerk eingebunden und kann in dieses Befehle senden und Befehle aus diesem empfangen. In dem Speicher des Bediengerätes sind bei dieser ersten Ausgestaltung als Befehle Auslösebefehle hinterlegt. Bei Betätigung eines manuell betätigbaren zweiten Schaltsensors wird ein Auslösebefehl über das Funkmodul an die Basisstation gesendet. In der Basisstation ist in einem Speicher der eigentliche Ansteuerbefehl abgelegt. Jeder Ansteuerbefehl ist einem Auslösebefehl zugeordnet, beispielsweise in einer Übersetzungsliste. Aus diesem Grunde handelt es sich bei einer solchen Auslegung bzw.

Verwendung des Bediengerätes um in seinem Speicher hinterlegte Auslösebefehle. Empfängt die Basisstation einen solchen Auslösebefehl, wird daraufhin der Ansteuerbefehl in das Gebäudeinstallationsnetzwerk gesendet und damit der gewünschte Aktor angesteuert.

Gemäß einer zweiten Ausgestaltung ist das Bediengerät selbst in das Gebäudeinstallationsnetzwerk eingebunden. Das Funkmodul des Bediengerätes ist dann ein Netzwerkfunkmodul und in das Gebäudeinstallationsnetzwerk eingebunden. In der Ausgestaltung, in der das Gebäudeinstallationsnetzwerk ein IP-Netzwerk ist, ist das Funkmodul WLAN-fähig. Bei dieser Ausgestaltung, bei der das Bediengerät mit seinem Funkmodul selbst Teilnehmer des Gebäudeinstallationsnetzwerkes ist, sind in dem Speicher des Bediengerätes die die in dem Gebäudeinstallationsnetzwerk eingebundenen Aktoren ansteuernden Befehle hinterlegt. Entsprechend dem Betätigungsevent des zumindest einen manuell ansteuerbaren zweiten Schaltsensors wird der diesem Betätigungsevent zugeordnete Befehl zur Ansteuerung des zumindest einen gewünschten Aktors gesendet.

Das Bediengerät kann auch dergestalt eingerichtet sein, dass die von dem zumindest einen manuell betätigbaren ersten Schaltsensor geschaltete gebäudetechnische Installation, beispielsweise eine Leuchte, auch von dem zumindest einen manuell betätigbaren zweiten Schaltsensor angesteuert werden kann. Dieses ist mitunter gewünscht, wenn die durch einen manuell betätigbaren ersten Schaltsensor geschaltete gebäudetechnische Installation in eine bestimmte Szene (Ambiente) zusammen mit anderen Aktoren mit eingebunden werden soll. Bei einer solchen Ausgestaltung ist das Funkmodul als Steuergerät an das die gebäudetechnische Installation schaltende Schaltorgan angeschlossen, um dieses zu schalten und ggfs. bis in eine bestimmte Stellung, beispielsweise eine Dimmstellung zu bringen. Dieses erlaubt auch eine Ansteuerung des ansonsten nur über einen manuell betätigbaren ersten Schaltsensor zu schaltende gebäudetechnische Installation durch ein anderes, in das Gebäudeinstallationsnetzwerk integriertes Bediengerät, welches sich beispielsweise benachbart zu einer anderen Tür des Raumes, in dem sich das vorbeschriebene Bediengerät befindet, installiert ist.

Die Stromversorgung des Bediengerätes erlaubt im Unterschied zu batteriebetriebenen Bediengeräten den Einsatz von Komponenten, die auch einen etwas höheren Stromverbrauch haben, wie beispielsweise ein für diese Zwecke dann notwendiges bidirektional arbeitendes Funkmodul. Kann durch die typischerweise im Steuermodul integrierte Steuereinheit von einem manuell betätigbaren zweiten Schaltsensor auch die von dem manuell betätigbaren ersten Schaltsensor geschaltete gebäudetechnische Installation angesteuert werden, kann eine Priorisierung der Ansteuerung dieser gebäudetechnischen Installation durch die dem zumindest einen manuell betätigbaren zweiten Schaltsensor zugehörige Steuereinheit vorgenommen werden.

In einer Weiterbildung eines solchen Bediengerätes werden nicht nur die Betätigungsevents des zumindest einen manuell betätigbaren zweiten Schaltsensors ausgewertet, sondern auch diejenigen des zumindest einen manuell betätigbaren ersten Schaltsensors, wenn Letzterer das die gebäudetechnische Installation schaltende Schaltorgan nicht unmittelbar schaltet, sondern dieses über eine Steuereinheit ansteuert, wie dieses etwa bei einem Relais oder einem Dimmer als Schaltorgan der Fall ist. Hierdurch ist die Zahl der Betätigungsevents vergrößert. Folglich kann auch eine größere Anzahl unterschiedlicher Befehle in dem Speicher abgelegt sein. Beispielsweise kann eine gleichzeitige Betätigung einer bestimmten Anzahl oder auch aller Schaltsensoren des Bediengerätes als Betätigungsevent kodiert sein, um dieses etwa in einen Einrichtemodus zu schalten.

Nachfolgend ist die Erfindung anhand von zwei Ausführungsbeispielen unter Bezugnahme auf die beigefügten Figuren beschrieben. Es zeigen:
- **Fig. 1:**: den Aufbau eines erfindungsgemäßes Gebäudeinstallationsnetzwerks in einer Prinzipskizze und
- **Fig. 2:**: den Aufbau eines erfindungsgemäßen Gebäudeinstallationsnetzwerkes gemäß einer weiteren Ausgestaltung.

In den beiden Ausführungsbeispielen sind gleiche Bauteile bzw. Elemente mit denselben Bezugszeichen kenntlich gemacht.

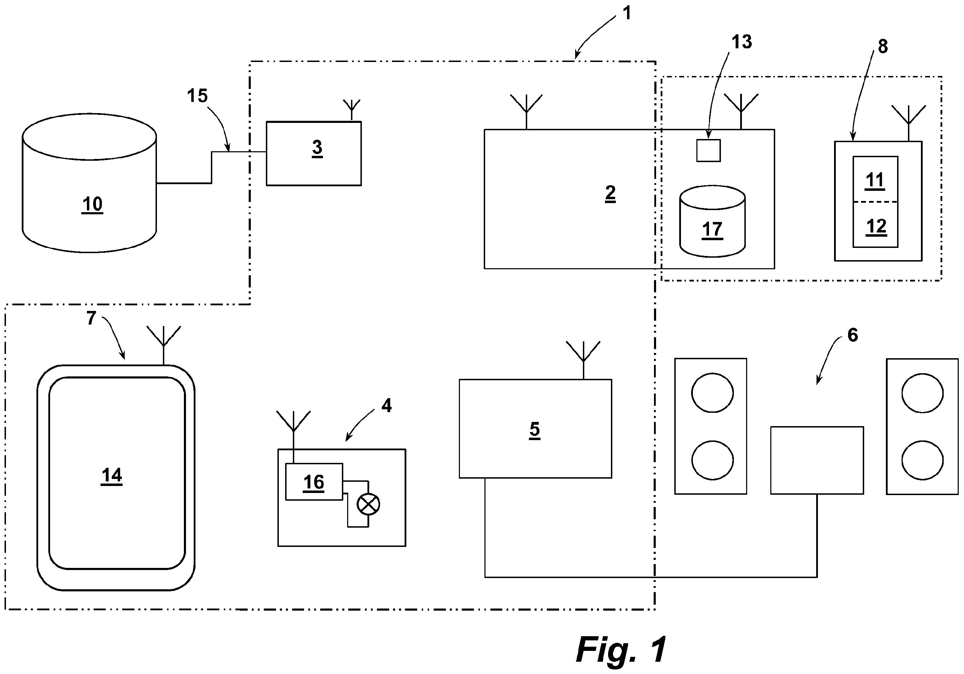

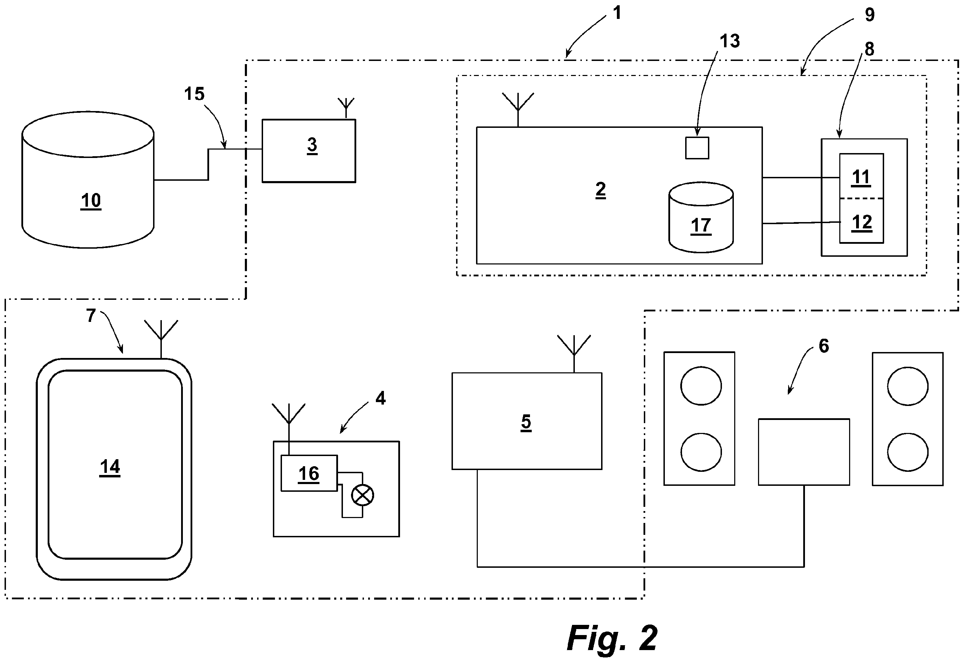

Ein Gebäudeinstallationsnetzwerk 1 ist bei dem dargestellten Ausführungsbeispiel ein IP-Netzwerk. Es umfasst mehrere, darin angemeldete Gebäudeinstallationsnetzwerkteilnehmer. Gebäudeinstallationsnetzwerkteilnehmer sind bei diesem Ausführungsbeispiel ein Ansteuergerät 2, ein Internetgateway 3, ein erster Aktor 4, der bei diesem Ausführungsbeispiel als Leuchte ausgeführt ist, eine Basisstation 5 zu einem proprietären Subdatennetzwerk umfassend einen über das proprietäre Subdatennetzwerk angesteuerten weiteren Aktor 6, bei dem es sich beispielhaft um eine Musikanlage handelt, und ein für die Zwecke der Einrichtung des Ansteuergerätes 2 vorübergehend in das Gebäudeinstallationsnetzwerk 1 eingebundenes Smartphone als Anzeigegerät 7. Alle Gebäudeinstallationsnetzwerkteilnehmer sind in das Gebäudeinstallationsnetzwerk 1 mit IP-Protokoll über WLAN eingebunden. Bei dem IP-Netzwerk handelt es sich um das gebäudeseitig ohnehin vorhandene IP-Netzwerk. An das Ansteuergerät 2 ist eine Sensorbaugruppe 8 angeschlossen, wobei die Sensorbaugruppe 8 bei dem Ausführungsbeispiel gemäß Figur 1 über Funk und bei dem Ausführungsbeispiel der Figur 2 drahtgebunden an das Ansteuergerät 2 angeschlossen ist. Bei dem Ausführungsbeispiel gemäß Figur 2 ist das Ansteuergerät 2 Teil eines wandseitig montierten Bediengerätes 9.

Über das Internetgateway 3 ist das Ansteuergerät 2 an einen Zentralserver 10 angeschlossen.

Die Sensorbaugruppe 8 umfasst zwei manuell betätigbare Schaltsensoren 11 und 12, die tastend zu betätigen sind. Bei einer manuellen Betätigung einer der beiden Schaltsensoren 11, 12 durch einen Nutzer wird ein Betätigungsevent an das Ansteuergerät 2 übermittelt. In diesem Betätigungsevent sind Informationen enthalten, welcher der Tastsensoren 11, 12 betätigt worden ist. Die beiden Schaltsensoren 11, 12 sind bei dem dargestellten Ausführungsbeispiel als Schaltwippe ausgebildet, wobei der obere Schaltsensor 11 das Komplementär zu dem unteren Schaltsensor 12 bildet und umgekehrt.

Ein Nutzerwunsch soll in diesem Ausführungsbeispiel lauten, dass bei Betätigung des Schaltsensors 11 ein bestimmtes Ambiente in dem Raum, in dem sich die Sensorbaugruppe 8 befindet, eingestellt wird, und zwar dass der erste Aktor 4 - die Leuchte - in eine bestimmte Dimmstellung und der zweite Aktor 6 - die Musikanlage - welcher über die ebenfalls als Aktor ansprechbare Basisstation 5 in das Gebäudeinstallationsnetzwerk 1 eingebunden ist, auf einen bestimmten Radiosender eingeschaltet werden. Um diese Aktion auslösen zu können, wird das Ansteuergerät 2 wie folgt eingerichtet:
In einem ersten Schritt wird das Ansteuergerät 2 in seinen Einrichtemodus geschaltet. Zur Anzeige des eingeschalteten Modus verfügt das Ansteuergerät 2 über eine LED 13. Diese leuchtet, wenn das Ansteuergerät 2 in seinen Einrichtemodus geschaltet ist. Im Betriebsmodus ist die LED 13 ausgeschaltet. Mittels der LED 13 wird dem einrichtenden Nutzer der aktuell eingeschaltete Modus des Ansteuergerätes 2 signalisiert. In seinen Einrichtemodus kann das Ansteuergerät 2 durch eine vordefinierte Betätigung des Schaltsensors 11 gebracht werden, und zwar bei dem dargestellten Ausführungsbeispiel durch Ausführen dreier kurzer aufeinander folgender Tastbetätigungen.

Sobald das Ansteuergerät 2 in den Einrichtemodus geschaltet ist, verbindet es sich mit dem in das Gebäudeinstallationsnetzwerk 1 zu diesem Zweck bereits eingebundenen Smartphone, dessen Display- und Bedienfunktionalität als Anzeigegerät 7 genutzt wird. Damit sind bezüglich des Ansteuergerätes 2 Anzeige- und Bedienfunktionalitäten von dem Ansteuergerät 2 auf das Anzeigegerät 7 ausgelagert, und zwar an ein Gerät, hier: ein Smartphone, welches typischerweise ohnehin vorhanden ist und ohnehin diese Funktionalitäten aufweist. Das Anzeigegerät 7 verfügt zur Anzeige der gesendeten Informationen und um Nutzereingaben entgegenzunehmen über ein touchsensitives Display 14. Zur Anzeige der empfangenen Information oder anderweitigen Daten von dem Ansteuergerät 2 ist das Anzeigegerät 7 mit einer entsprechenden Anwendung (App) ausgerüstet.

Nachdem das Ansteuergerät 2 in seinen Einrichtemodus geschaltet ist, was grundsätzlich auch über das Anzeigegerät 7 möglich ist, scannt das Ansteuergerät 2 das Gebäudeinstallationsnetzwerk 1 auf darin organisierte Gebäudeinstallationsnetzwerkteilnehmer. Dabei ermittelt es den ersten Aktor 4 - die Leuchte -, die Basisstation 5 des proprietären Subdatennetzwerkes, in das der zweite Aktor 6 - die Musikanlage - eingebunden ist, sowie das Anzeigegerät 7. Zum Scannen des Gebäudeinstallationsnetzwerkes 1 wird eine herkömmliche Netzwerkscanroutine eingesetzt.

Nach dem Scannen ermittelt das Ansteuergerät 2 die ansteuerbaren Aktoren bzw. die Geräte, mit denen ein Aktor angesteuert werden kann aus der Anzahl der ermittelten Netzwerkteilnehmer. Auch die Basisstation 5 ist als ansteuerbarer Aktor zu verstehen, da über diese zumindest mittelbar auf einen Aktor über das Gebäudeinstallationsnetzwerk 1 zugegriffen werden kann. Zum Ermitteln greift das Ansteuergerät 2 auf bestimmte, den Gebäudeinstallationsnetzwerkteilnehmern herstellerseitig zugewiesene Attribute zurück, die auf eine Ansteuerbarkeit hinweisen. Die ermittelten, ansteuerbaren Aktoren 4, 5 stellen bei dieser Auslegung des Gebäudeinstallationsnetzwerkes eine Teilmenge der Gesamtheit der Gebäudeinstallationsnetzwerkteilnehmer dar. Es versteht sich, dass, sollte das Gebäudeinstallationsnetzwerk 1 ausschließlich aus ansteuerbaren Aktoren bestehen, alle Gebäudeinstallationsnetzwerkteilnehmer als Aktoren im Zuge des Scanvorganges durch das Ansteuergerät 2 erkannt werden.

Nachdem das Ansteuergerät 2 bei dem beschriebenen Ausführungsbeispiel die beiden Aktoren - den ersten Aktor 4, hier: die Leuchte sowie die Basisstation 5 als zweiten Aktor, hier: die Musikanlage 6 ansteuernd - ermittelt hat, sendet es Informationen zu diesen Aktoren zu dem Anzeigegerät 7. Hierzu wird die Funkverbindung des Gebäudeinstallationsnetzwerkes 1 zwischen Ansteuergerät 2 und Anzeigegerät 7 genutzt.

Auf dem Display 14 des Anzeigegerät 7 werden ein eindeutiger Name des Aktors 4, 5 sowie eine von dem Aktor zur Verfügung gestellte und ihn selbst betreffende Beschreibung angezeigt. Diese Beschreibung umfasst beispielsweise den installierten Standort zur einfacheren Identifizierung. Der Aktor kann als Piktogramm auf dem Display 14 des Anzeigegerätes 7 angezeigt werden.

Neben den Informationen zu den Aktoren werden auf dem Display 14 des Anzeigegerätes 7 die durch das Ansteuergerät 2 erkennbaren Betätigungsevents der beiden manuell betätigbaren Schaltsensoren 11, 12 angezeigt. Die spezifischen Betätigungsevents werden für die Schaltsensoren Tastsensoren 11, 12 über eine entsprechende graphische Wiedergabe dargestellt. Die beiden Schaltsensoren 11, 12 sind dabei unabhängig voneinander visualisiert und können durch ein Antippen ausgewählt werden.

Ein Nutzer wählt bei dem dargestellten Ausführungsbeispiel als nächstes einen der angezeigten Aktor 4, 5 als anzusteuernden Aktor 4, 5 aus. Dem vorstehend genannten Wunsch Rechnung tragend, selektiert der Nutzer zunächst den ersten Aktor 4 - die Leuchte - auf dem Display 14. Das Auswählen dieses Aktors 4 wird von dem Anzeigegerät 7 zurück an das Ansteuergerät 2 gesendet.

Das Ansteuergerät 2 verbindet sich über das Internetgateway 3 mittels einer gesicherten Internetverbindung 15 mit dem Zentralserver 10. Auf dem Zentralserver 10 sind in einer Datenbank eine Vielzahl von Datensätze für den Aktor 4 hinterlegt, wobei jeder Datensatz einen Roh-API-Befehl, ein den Roh-API-Befehl beschreibender Algorithmus sowie Angaben zu der Wirkung des API-Befehls umfasst. Im vorliegenden Fall ist für den ersten Aktor 4 zumindest ein Roh-API-Befehl gespeichert, mit dem dieser eingeschaltet werden kann und ein anderer Roh-API-Befehl, mit dem dieser ausgeschaltet werden kann. Beide Datensätze verweisen in einem zusätzlichen Datenfeld mit der Information aufeinander, dass diese sich komplementär ergänzen.

Die den ausgewählten Aktor, hier: den ersten Aktor 4 betreffenden Datensätze werden von dem Ansteuergerät 2 von dem Zentralserver 10 abgerufen. Die Angaben zur Wirkung des API-Befehls werden anschließend von dem Ansteuergerät 2 an das Anzeigegerät 7 gesendet, welches diese auf dem Display 14 anzeigt. Angezeigt werden ebenfalls die möglichen, von dem Ansteuerungsgerät 2 erkennbaren Betätigungsevents in Form einer Repräsentation der Schaltsensoren 11, 12.

Ein Nutzer ordnet dann einem Betätigungsevent eine angezeigte, durch den ersten Aktor 4 ausführbare Aktion zu. Dies ist im vorliegenden Ausführungsbeispiel das Zuordnen der Einschaltfunktionalität des ersten Aktors 4 zu dem Schaltsensor 11.

Diese Zuordnung wird an das Ansteuergerät 2 zurückgesendet. Das Ansteuergerät 2 bildet mit dieser Information einen ausführbaren API-Befehl, mit dem der erste Aktor 4 - die Leuchte - angesteuert werden kann, um diese anzuschalten. Der von dem Zentralserver 10 heruntergeladene Roh-API-Befehl lautet im vorliegenden Fall beispielhaft "\\x\SwitchOn\". Der diesem Roh-API-Befehl zugeordnete Algorithmus ist nunmehr in der Lage, den Platzhalter "x" durch die dem ersten Aktor 4 zugewiesene Gebäudeinstallationsnetzwerkadresse zu ersetzen und einen ausführbaren API-Befehl zu generieren. Ein solcher ausführbarer API-Befehl könnte - unter der Annahme, dass dem ersten Aktor 4 die Gebäudeinstallationsnetzwerkadresse "192.168.0.5" zugeordnet ist - somit "\\192.168.0.5\SwitchOn\" lauten. Dieser durch die Adressenzuordnung individualisierte API-Befehl ist damit an den ersten Aktor 4 in Bezug auf die ihm zugewiesene Gebäudeinstallationsnetzwerkadresse angepasst. Beim Senden dieses API-Befehls in das Gebäudeinstallationsnetzwerk 1 wird dieser von dem ersten Aktor 4 - der Leuchte - wegen der darin enthaltenen Adresse "192.168.0.5", als für diesen Aktor 4 bestimmt, empfangen. Der Befehl "SwitchOn" wird von einer Auswerteeinheit 16 des ersten Aktors 4 ausgewertet und die Leuchte eingeschaltet.

Dieser individualisierte API-Befehl wird in einem Speicher 17 des Ansteuergerätes 2 bezüglich des zugeordneten Betätigungsevents, hier: das Betätigen des Schaltsensors 11, gespeichert. Der Speicher 17 ist hierzu in Bereiche bzw. Speichersektoren unterteilt, die jeweils einem speziellen Betätigungsevent (Einfachbetätigung, Mehrfachbetätigung, Kurz- oder Langbetätigung) zugeordnet sind.

Befindet sich das Ansteuergerät 2 in seinem Betriebsmodus und wird der Schaltsensor 11 manuell durch einen Nutzer betätigt, wird der dazugehörige API-Befehl aus dem Speicher 17 des Ansteuergerätes 2 ausgelesen und über das dem Ansteuergerät 2 zugehörige Netzwerkfunkmodul in das Gebäudeinstallationsnetzwerk 1 gesendet. Der erste Aktor 4 - die Leuchte - empfängt diesen API-Befehl, erkennt diesen als einen für ihn bestimmten und führt ihn aus.

Nachdem der Nutzer auf dem Anzeigegerät 7 einem Betätigungsevent des Schaltsensors 11 die gewünschte Aktion zugeordnet hat, hier: dass der erste Aktor 4 - die Leuchte - eingeschaltet wird, wird dem Nutzer vorgeschlagen, dem komplementären Betätigungsereignis - das Betätigen des Schaltsensors 12 - die komplementäre Aktion - das Ausschalten des ersten Aktors 4 - zuzuordnen. Dieser Vorschlag wird über das Ansteuergerät 2 ermittelt, welches in dem Datensatz des Einschaltens des ersten Aktors 4 erkennt, dass ein komplementärer Datensatz existiert. Ferner erkennt das Ansteuergerät 2, dass ein komplementäres Betätigungsevent - hier das Betätigen des Schaltsensors 12 - tatsächlich möglich ist.

Stimmt der Nutzer dem gemachten Vorschlag zu, wird der diesbezügliche API-Befehl in analoger Weise gebildet, wie vorstehend ausgeführt. Der Roh-API-Befehl heißt dann beispielsweise "\\x\SwitchOff\". Auch hier wird das "x" durch den Algorithmus durch die Gebäudeinstallationsnetzwerkadresse des ersten Aktors 4 - die Leuchte - in dem Ansteuergerät 2 ersetzt. Der auf diese Weise individualisierte API-Befehl wird in dem Teil des Speichers 17 des Ansteuergerätes 2 gespeichert, dem das Betätigungsevent des Schaltsensors 12 zugeordnet ist.

Bezüglich des Einschaltens des zweiten Aktors 5 mit seiner Musikanlage 6 - wird genauso verfahren, wie beim Einrichten bezüglich des ersten Aktors 4. Unterschiedlich ist hier, dass dieser Aktor 6 über eine ihr zugeordnete Basisstation 5 mittels eines proprietären Subdatennetzwerkes angesteuert wird. Für den Vorgang des Einrichtens ist dieses jedoch unerheblich. Die Basisstation 5 kommuniziert hierzu intern mit diesem Aktor 6 - der Musikanlage - über ein proprietäres, herstellerseitig definiertes Protokoll. Die Basisstation 5 kann ebenfalls über das Internetgateway 3 mit unterschiedlichen Servern verbunden sein, von denen Musikinformationen abrufbar sind. Im Unterschied zum Einrichten des ersten Aktors 4 muss ein Nutzer für einen zu individualisierenden API-Befehl eine einzuschaltende Radiostation auswählen. Der diesbezügliche Roh-API-Befehl könnte lauten"\\x\TurnRadioOn\y". Mittels des Algorithmus wird über das Anzeigegerät 7 von einem einrichtenden Nutzer abgefragt, welcher Radiosender gewünscht ist. Hierzu werden mögliche Radiostationen zur Auswahl angezeigt. Beispielhaft soll hier "Radio123" eingeschaltet werden. Der diesem Roh-API-Befehl zugehörige Algorithmus ersetzt dann das "x" durch die Gebäudeinstallationsnetzwerkadresse der Basisstation 5 und das "y" durch "Radiol 23", sodass der ausführbare API-Befehl - unter der Annahme, dass die Basisstation 5 über die Gebäudeinstallationsnetzwerkadresse "192.168.0.6" ansprechbar ist - "\\192.168.0.6\TurnRadioOn\Radio123" lautet.

Dieser API-Befehl wird zusätzlich zu dem bereits in dem Speicher 17 abgelegten, den ersten Aktor 4 - die Leuchte - ansteuernden, einem Betätigungsevent zugeordneten API-Befehl gespeichert. Bei einem Betätigen des Schaltsensors 11 mit diesem Betätigungsevent werden dann beide API-Befehle nacheinander in das Gebäudeinstallationsnetzwerk 1 über das Netzwerkfunkmodul des Ansteuergerätes 2 gesendet.

Neben dem Abrufen von Datensätzen von dem Zentralserver 10 können von der Basisstation 5 desdurch das Ansteuergerät 2 bereits individualisierte API-Befehle abgerufen werden. Die Basisstation 5 stellt hierfür API-Befehle bereit, die bereits ausführbar sind und in ihrer Gesamtheit beispielsweise alle empfangbaren Radiostationen zur Auswahl stellen. Das Ansteuergerät 2 ruft von der Basisstation 5 diese ausführbaren API-Befehle zusammen mit der einsetzenden Wirkung dieser API-Befehle ab und sendet diese an das bei dem dargestellten Ausführungsbeispiel als Smartphone eingesetzte Anzeigegerät 7, sodass diese zusätzlichen Möglichkeiten auf dem Display 14 dem Nutzer zur Auswahl für den Prozess des Einrichtens des Ansteuergerätes 2 angezeigt werden. Diese Aktionen können dann, unter identischem Vorgehen wie bei anderen Roh-API-Befehlen, einem Betätigungsevent zugeordnet und in dem Ansteuergerät 2 in dem Speicher 17 bezüglich des entsprechenden Betätigungsevents abgespeichert werden.

Ist das Ansteuergerät 2 eingerichtet, wird dieses in seinen Betriebsmodus geschaltet. Dieses kann auch selbsttätig nach einer gewissen Time-Out-Zeit erfolgen, wenn innerhalb der Time-Out-Zeit das Ansteuergerät 2 keine Daten von dem Anzeigegerät 7 erhalten hat. Das als Anzeigegerät 7 dienende Smartphone kann dann aus dem Gebäudeinstallationsnetzwerk 1 abgemeldet werden.

In dem in den Figuren beschriebenen Ausführungsbeispiel ist das Gebäudeinstallationsnetzwerk 1 als peer-to-peer-Netzwerk ausgebildet. In gleicher Weise kann ein Gebäudeinstallationsnetzwerk eingerichtet sein, welches über eine Netzwerkbasisstation verfügt. Über eine solche Netzwerkbasisstation können auch drahtgebunden Netzwerkteilnehmer erreicht bzw. angesteuert werden.

Die Erfindung ist anhand eines Ausführungsbeispiels beschrieben worden. Ohne den Schutzbereich, der geltenden Ansprüche, zu verlassen, ergeben sich für den Fachmann zahlreiche weitere Ausgestaltungen, ohne dass diese im Rahmen dieser Ausführungen im Einzelnen beschrieben werden müssen.

### Bezugszeichenliste

- 1: Gebäudeinstallationsnetzwerk
- 2: Ansteuergerät
- 3: Internetgateway
- 4: Aktor/Leuchte
- 5: Aktor/Basisstation
- 6: Aktor/Musikanlage
- 7: Anzeigegerät
- 8: Sensorbaugruppe
- 9: Bediengerät
- 10: Zentralserver
- 11: Schaltsensor
- 12: Schaltsensor
- 13: LED
- 14: Display
- 15: Internetverbindung
- 16: Auswerteeinheit
- 17: Speicher

## Patentansprüche

1. Verfahren zum Einrichten eines Ansteuergerätes (2) als Teilnehmer in einem Gebäudeinstallationsnetzwerk (1), wobei in das Gebäudeinstallationsnetzwerk (1) das Ansteuergerät (2), ein Anzeigegerät (7), wenigstens ein Aktor (4, 5), der über zumindest einen API-Befehl (application programming interface-Befehl) zur Ausführung wenigstens einer Aktion angesteuert werden kann, und ein Internetgateway (3) eingebunden sind und wobei das Ansteuergerät (2) zumindest einen manuell betätigbaren Schaltsensor (11, 12) aufweist, welches Verfahren mit folgenden Schritte ausgeführt wird:
- Ermitteln des wenigstens einen in das Gebäudeinstallationsnetzwerk (1) eingebundenen Aktors (4, 5) durch das Ansteuergerät (2),
- Abrufen wenigstens eines Datensatzes zu dem wenigstens einen ermittelten Aktor (4, 5) von einem Zentralserver (10) über das Internet mittels des Internetgateways (3) durch das Ansteuergerät (2), wobei der Datensatz zumindest einen Roh-API-Befehl, einen Algorithmus, mit dem der Roh-API-Befehl zu einem ausführbaren API-Befehl individualisiert werden kann, und Angaben zu der Aktion, die der Aktor (4, 5) bei Ansteuerung durch den API-Befehl ausführt, umfasst,
- Senden von Information betreffend den zumindest einen Aktor (4, 5), von Angaben zu der zumindest einen, jeweilig möglichen Aktion des zumindest einen Aktors (4, 5) und von durch das Ansteuergerät (2) erkennbaren Betätigungsevents seines zumindest einen manuell betätigbaren Schaltsensors (11, 12) an das Anzeigegerät (7) durch das Ansteuergerät (2),
- Anzeigen der Information, der Angaben sowie durch das Ansteuergerät (2) erkennbare Betätigungsevents seines zumindest einen manuell betätigbaren Schaltsensors (11, 12) auf dem Anzeigegerät (7),
- nutzerseitiges Zuordnen zumindest einer bezüglich des wenigstens einen Aktors (4, 5) ausführbaren Aktion zu einem durch das Ansteuergerät (2) erkennbaren Betätigungsevent,
- Senden der Zuordnung an das Ansteuergerät (2),
- Individualisieren des zumindest einen der zugeordneten Aktion entsprechenden Roh-API-Befehls durch Bilden eines ausführbaren API-Befehls unter Verwendung des dem Roh-API-Befehl zugehörigen Algorithmus durch das Ansteuergerät (2),
- Speichern des individualisierten API-Befehls in einem Speicher (17) des Ansteuergeräts (2).

2. Verfahren nach Anspruch 1, **dadurch gekennzeichnet, dass** zum Individualisieren des zumindest einen Roh-API-Befehls und Erzeugen eines ausführbaren API-Befehls dieser wenigstens einen Platzhalter beinhaltet, wobei der Platzhalter in den Roh-API-Befehlen anstelle von zumindest einer individuellen netzwerk- und/oder nutzerbezogenen Information steht und der diesem Roh-API-Befehl zugeordnete Algorithmus den einzusetzenden Inhalt zu dem Platzhalter beschreibt und wobei während des Schrittes des Individualisierens des Roh-API-Befehls das Ansteuergerät (2) diesen Platzhalter unter Zuhilfenahme des Algorithmus durch die individuell vorliegende netzwerk- und/oder nutzerbezogene Information ersetzt.

3. Verfahren nach Anspruch 1 oder 2, **dadurch gekennzeichnet, dass** die auf dem Zentralserver (10) zumindest eine gespeicherte Angabe zu dem zumindest einen Roh-API-Befehl ein Zustand des zugeordneten Aktors (4, 5) ist, den der Aktor (4, 5) einnimmt, wenn er mit dem der Angabe zugeordneten API-Befehl angesteuert wird.

4. Verfahren nach Anspruch 3, **dadurch gekennzeichnet, dass** das Ansteuergerät (2) zumindest zwei Betätigungsevents des zumindest einen manuell betätigbaren Schaltsensors (11, 12) erkennen kann und auf dem Zentralserver (10) zumindest zwei Roh-API-Befehle für einen Aktor (4, 5) gespeichert sind, wobei diese zwei Roh-API-Befehle zu komplementären Zuständen eines anzusteuernden Aktors (4, 5) führen, und auf dem Zentralserver (10) die Information vorhanden ist, dass der zweite Roh-API-Befehl zu dem komplementären Zustand des ersten Roh-API-Befehls führt und diese Information von dem Ansteuergerät (2) abgerufen und dem Nutzer über das Anzeigegerät (7) insoweit zur Verfügung gestellt wird, dass dem Nutzer nach dem Zuordnen einer ersten Aktion für ein erstes Betätigungsevent seines zumindest einen manuell betätigbaren Schaltsensors (11, 12) vorgeschlagen wird, einem zweiten Betätigungsevent oder einem ggf. vorhandenen zweiten manuell betätigbaren Schaltsensor (11, 12) die komplementäre Aktion zuzuordnen.

5. Verfahren nach einem der Ansprüche 1 bis 4, **dadurch gekennzeichnet, dass** das Ansteuergerät (2) von dem Aktor (4, 5) zumindest einen zusätzlichen API-Befehl zum Ausführen einer möglichen Aktion durch den anzusteuernden Aktor (4, 5) abruft, die dem Nutzer durch das Ansteuergerät (2) auf dem Anzeigegerät (7) als weitere Angabe angezeigt wird.

6. Verfahren nach einem der Ansprüche 1 bis 5, **dadurch gekennzeichnet, dass** nach dem Ermitteln des wenigstens einen in das Gebäudeinstallationsnetzwerk (1) eingebundenen Aktors (4, 5) durch das Ansteuergerät (2) und vor dem Abrufen des wenigstens einen Datensatzes von dem Zentralserver (10), Informationen zu dem wenigstens einen ermittelten Aktor (4, 5) an das Anzeigegerät (7) durch das Ansteuergerät (2) gesendet werden, der Nutzer auf dem Anzeigegerät (7) aus dem wenigstens einen ermittelten Aktor (4, 5) mindestens einen auswählt, der mittels eines mit dem Ansteuergerät (2) erkennbaren Betätigungsevents angesteuert werden soll und dass das Anzeigegerät (7) diese Auswahl an das Ansteuergerät (2) sendet und das Ansteuergerät (2) wenigstens einen die auszuführenden Aktionen betreffenden Datensatz zu dem ausgewählten Aktor (4, 5) von dem Zentralserver (10) abruft.

7. Verfahren nach einem der Ansprüche 1 bis 6, **dadurch gekennzeichnet, dass** das Anzeigegerät (7) über ein Display (14) verfügt und auf dem Anzeigegerät (7) der wenigstens eine anzusteuernde Aktor (4, 5) und/oder der zumindest eine Schaltsensor (11, 12), dem eine Aktion zugeordnet werden kann, über Piktogramme visualisiert werden.

8. Verfahren nach einem der Ansprüche 1 bis 7, **dadurch gekennzeichnet, dass** das Ansteuergerät (2) in zwei Modi schaltbar ist, wobei ein erster Modus ein Einrichtemodus und ein zweiter Modus ein Betriebsmodus ist, wobei das Ansteuergerät (2) Anzeigemittel, etwa eine LED (13) aufweist, mit denen der aktuell eingestellte Modus angezeigt wird.

9. Verfahren nach einem der Ansprüche 1 bis 8, **dadurch gekennzeichnet, dass** das Anzeigegerät (7) mit dem Ansteuergerät (2) über eine Funkverbindung kommuniziert.

10. Verfahren nach einem der Ansprüche 1 bis 9, **dadurch gekennzeichnet, dass** zwischen dem Ansteuergerät (2) und dem Zentralserver (10) zum Abrufen des zumindest einen Datensatzes eine gesicherte Verbindung aufgebaut wird.

11. Verfahren nach einem der Ansprüche 1 bis 10, **dadurch gekennzeichnet, dass** das Gebäudeinstallationsnetzwerk (1) ein IP-Netzwerk ist.

12. Verfahren nach Anspruch 11, **dadurch gekennzeichnet, dass** die Gebäudeinstallationsnetzwerkteilnehmer über LAN oder über WLAN in das Gebäudeinstallationsnetzwerk (1) eingebunden sind.

13. Verfahren nach einem der Ansprüche 1 bis 12, **dadurch gekennzeichnet, dass** in das Gebäudeinstallationsnetzwerk (1) ein proprietäres Subdatennetzwerk eingebunden ist, wobei das proprietäre Subdatennetzwerk eine Basisstation (5) und wenigstens einen ansteuerbaren Aktor (6) umfasst, wobei die Basisstation (5) mit API-Befehlen ansteuerbar ist und die Basisstation (5) den Aktor (6) ansteuert.

14. Verfahren nach Ansprüche 1 bis 13, **dadurch gekennzeichnet, dass** das Ansteuergerät Teil einer in das Gebäudeinstallationsnetzwerk eingebundenen Basisstation ist, die mit einem manuell betätigbaren Schaltsensor über ein proprietäres Funknetzwerk verbunden ist, wobei bei Betätigung des Sensors ein Betätigungsevent in dem Ansteuergerät ausgelöst wird.

15. Verfahren nach einem der Ansprüche 1 bis 13, **dadurch gekennzeichnet, dass** das Ansteuergerät (2) Teil eines Bediengerätes (9) ist, welches wenigstens einen manuell betätigbaren Schaltsensor (8) aufweist, wobei bei Betätigen desselben ein Betätigungsevent in dem Ansteuergerät (2) ausgelöst wird.

## Claims

1. Method for setting up a control unit (2) as participant in a building installation network (1), wherein the control unit (2), a display unit (7), at least one actuator (4, 5) which can be controlled via at least one API command (application programming interface command) to carry out at least one action and an internet gateway (3) are integrated into the building installation network (1) and wherein the control unit (2) comprises at least one manually operated switching sensor (11, 12), which method is carried out with the following steps:
- Detecting the at least one actuator (4, 5) integrated in the building installation network (1) by the control unit (2),
- Retrieving at least one data record on the at least one detected actuator (4, 5) from a central server (10) via internet via the internet gateway (3) by the control unit (2), wherein the data record comprises at least one raw API command, one algorithm by which the raw API command can be individualized to be an executable API command and information on the action the actuator (4, 5) carries out when controlled by the API command,
- Transmitting information regarding the at least one actuator (4, 5), details on the at least one possible action of the at least one actuator (4, 5) and operation events detectable by the control unit (2) of its at least one manually operated switching sensor (11, 12) to the display unit (7) by the control unit (2),
- Displaying the information, the details and the operation events detectable by the control unit (2) of its at least one manually operated switching sensor (11, 12) on the display unit (7),
- Assigning by the user of at least one action to be carried out in relation with the at least one actuator (4, 5) to an operation event to be detected by the control unit (2),
- Transmitting the assignment to the control unit (2),
- Individualization of the at least one raw API command corresponding to the assigned action by creating an executable API command, using the algorithm assigned to the raw API command by the control unit (2),
- Storing the individualized API command in a memory (17) of the control unit (2).

2. Method in accordance with Claim 1, **characterized by the fact** that for individualization of the at least one raw API command and generation of an executable API command, the raw API command contains at least one wild-card, wherein the wild-card in the raw API commands stands for at least one individual network and/or user-related information, and the algorithm assigned to this raw API command describes the contents by which the wild-card is replaced, and wherein during individualization of the raw API command the control unit (2) replaces this wild-card by the individually available network and/or user-related information by means of the algorithm.

3. Method in accordance with Claim 1 or 2, **characterized by the fact** that the at least one detail on the at least one raw API command stored on the central server (10) is a state of the assigned actuator (4, 5) the actuator (4, 5) takes on when it is controlled by the API command assigned to the detail.

4. Method in accordance with Claim 3, **characterized by the fact** that the control unit (2) can detect at least two operation events of the at least one manually operated switching sensor (11, 12) and at least two raw API commands for one actuator (4, 5) are stored on the central server (10), wherein these two raw API commands lead to complementary states of an actuator to be controlled (4, 5), and the central server (10) contains the information that the second raw API command leads to the complementary state of the first raw API command and this information is called up by the control unit (2) and made available to the user via the display unit (7) to that extent that after assigning a first action for a first operation event of its at least one manually operated switching sensor (11, 12) it is proposed to the user to assign the complementary action to a second operation event or a possibly existing second manually operated switching sensor (11, 12).

5. Method in accordance with any of the Claims 1 to 4, **characterized by the fact** that the control unit (2) retrieves from the actuator (4, 5) at least one additional API command to carry out a possible action by the actuator to be controlled (4, 5), which action is displayed for the user by the control unit (2) as additional detail on the display unit (7).

6. Method in accordance with any of Claims 1 to 5, **characterized by the fact** that after determination of the at least one actuator (4, 5) integrated into the building installation network (1) by the control unit (2) and before retrieval of the at least one data record from the central server (10), information on the at least one determined actuator (4, 5) are sent to the display unit (7) by the control unit (2), the user selects at least one actuator out of the at least one determined actuator (4, 5) on the display unit (7), which actuator is to be controlled by means of an operation event to be detectable by the control unit (2) and that the display unit (7) sends this selection to the control unit (2) and the control unit (2) retrieves from the central server (10) at least one data record on the actuator selected (4, 5) regarding the actions to be carried out.

7. Method in accordance with any of Claims 1 to 6, **characterized by the fact** that the display unit (7) has a display (14) and the at least one actuator (4, 5) to be controlled and/or the at least one switching sensor (11, 12) to whom an action can be assigned can be visualised by means of icons on the display unit (7).

8. Method in accordance with any of Claims 1 to 7, **characterized by the fact** that the control unit (2) can be switched into two modes, wherein a first mode is a set-up mode and a second mode is an operation mode, the control unit (2) being provided with display means, like for example an LED (13), by which the currently set mode is displayed.

9. Method in accordance with any of Claims 1 to 8, **characterized by the fact** that the display unit (7) communicates with the control unit (2) via radio link.

10. Method in accordance with any of Claims 1 to 9, **characterized by the fact** that a secure connection is established between the control unit (2) and the central server (10) to retrieve the at least one data record.

11. Method in accordance with any of Claims 1 to 10, **characterized by the fact** that the building installation network (1) is an IP network.

12. Method in accordance with Claim 11, **characterized by the fact** that the participants of the building installation network are integrated into the building installation network (1) via LAN or via WLAN.

13. Method in accordance with any of Claims 1 to 12, **characterized by the fact** that a proprietary sub-data network is included in the building installation network (1), wherein the proprietary sub-data network comprises a base station (5) and at least one controllable actuator (6), the base station (5) being controllable with API commands and the base station (5) controlling the actuator (6).

14. Method in accordance with Claims 1 to 13, **characterized by the fact** that the control unit is part of a base station integrated in the building installation network, which base station is connected with a manually operated switching sensor via a proprietary radio network, wherein operation of the sensor releases an operation event in the control unit.

15. Method in accordance with any of Claims 1 to 13, **characterized by the fact** that the control unit (2) is part of an operation unit (9), which is provided with at least one manually operated switching sensor (8), wherein operating the switching sensor releases an operation event in the control unit (2).

## Revendications

1. Procédé de mise en place d'une unité de commande (2) en tant qu'abonné dans un réseau d'installation du bâtiment (1), l'unité de commande (2), une unité d'affichage (7), au moins un actionneur (4, 5), qui peut être commandé par au moins une instruction API (application programming interface command) pour l'exécution d'au moins une action, et une passerelle Internet (3) étant intégrés dans le réseau d'installation du bâtiment (1), et l'unité de commande (2) présentant au moins un capteur de commutation (11, 12) actionnable manuellement, lequel procédé est réalisé avec les étapes suivantes:
- Détermination du au moins un actionneur (4, 5) intégré dans le réseau d'installation du bâtiment (1) par l'unité de commande (2),
- Récupération d'au moins un jeu de données pour l'au moins un actionneur déterminé (4, 5) d'un serveur central (10) via Internet au moyen de la passerelle Internet (3) par l'unité de commande (2), le jeu de données comprenant au moins une instruction API brute, un algorithme permettant de personnaliser l'instruction API brute en une instruction API exécutable, et des détails de l'action que l'actionneur (4, 5) exécute lorsqu'il est commandé par l'instruction API,
- Transmission d'informations concernant l'au moins un actuateur (4, 5), de détails sur l'au moins une action possible du au moins un actuateur (4, 5) et d'événements d'actionnement détectables par l'unité de commande (2) de son au moins un capteur de commutation actionnable manuellement (11, 12) à l'unité d'affichage (7) par l'unité de commande (2),
- Affichage sur l'unité d'affichage (7) des informations, des détails et des événements d'actionnement détectables par l'unité de commande (2) de son au moins un capteur de commutation (11, 12) actionnable manuellement,
- Affectation côté utilisateur d'au moins une action qui peut être exécutée par rapport à l'au moins un actionneur (4, 5) à un événement d'actionnement détectable par l'unité de commande (2),
- Envoi de l'affectation à l'unité de commande (2),
- Personnalisation de l'au moins une instruction API brute correspondant à l'action affectée en formant une instruction API exécutable à l'aide de l'algorithme associé à l'instruction API brute par l'unité de commande (2),
- Stockage de l'instruction API personnalisée dans une mémoire (17) de l'unité de commande (2).

2. Procédé selon la revendication 1, **caractérisé en ce que,** pour personnaliser l'au moins une instruction API brute et générer une instruction API exécutable, l'instruction API brute comprenant au moins un caractère de remplissage, le caractère de remplissage se trouvant dans les instructions API brutes au lieu d'au moins une information individuelle relative au réseau et/ou à l'utilisateur, et l'algorithme attribué à cette instruction API brute décrit le contenu à utiliser pour le joker, et dans lequel, pendant l'étape de personnalisation de l'instruction API brute, l'unité de commande (2) remplace ce joker à l'aide de l'algorithme par l'information individuelle relative au réseau ou à l'utilisateur.

3. Procédé selon la revendication 1 ou 2, **caractérisé en ce que** l'au moins une indication stockée sur le serveur central (10) concernant l'au moins une instruction API brute est un état de l'actionneur affecté (4, 5) que l'actionneur (4, 5) prend lorsqu'il est piloté avec l'instruction API affecté à l'indication.

4. Procédé selon la revendication 3, **caractérisé en ce que** l'unité de commande (2) peut détecter au moins deux événements d'actionnement du au moins un capteur de commutation (11, 12) actionnable manuellement et qu'au moins deux instructions API brutes pour un actionneur (4, 5) sont stockées sur le serveur central (10), ces deux instructions API brutes mênant à des états complémentaires d'un actionneur à commander (4, 5), et l'information étant présente sur le serveur central (10) que la deuxième instruction API brute mêne à l'état complémentaire de la première instruction API brute et que cette information est appelée par l'unité de commande (2) et mise à la disposition de l'utilisateur par l'intermédiaire de l'unité d'affichage (7) dans la mesure où, après avoir attribué une première action pour un premier événement d'actionnement de son au moins un capteur de commutation (11, 12) actionnable manuellement, il est proposé à l'utilisateur d'attribuer l'action complémentaire à un deuxième événement d'actionnement ou, le cas échéant, à un deuxième capteur de commutation (11, 12) actionnable manuellement.

5. Procédé selon l'une des revendications 1 à 4, **caractérisé en ce que** l'unité de commande (2) récupère de l'actionneur (4, 5) au moins une instruction API supplémentaire pour l'exécution d'une action possible de l'actionneur à commander (4, 5), laquelle instruction est affichée à l'utilisateur par l'unité de commande (2) sur l'unité d'affichage (7) comme indication supplémentaire.

6. Procédé selon l'une des revendications 1 à 5, **caractérisé en ce que,** après que l'unité de commande (2) a déterminé l'au moins un actionneur (4, 5) intégré dans le réseau d'installation du bâtiment (1) et avant que l'au moins un jeu de données soit récupéré sur le serveur central (10), des informations sur l'au moins un actionneur déterminé (4, 5) sont envoyées à l'unité d'affichage (7) par l'unité de commande (2), l'utilisateur sélectionne sur l'unité d'affichage (7), parmi l'au moins un actionneur (4, 5) déterminé au moins un actionneur qui doit être actionné au moyen d'un événement d'actionnement identifiable par l'unité de commande (2), et **en ce que** l'unité d'affichage (7) envoie cette sélection l'unité de commande (2) et l'unité de commande (2) récupère du serveur central (10) au moins un jeu de données relatif à l'actionneur (4, 5) sélectionné pour les actions à effectuer.

7. Procédé selon l'une des revendications 1 à 6, **caractérisé en ce que** l'unité d'affichage (7) présente un affichage (14) et sur l'unité d'affichage (7), l'au moins un actionneur (4, 5) à commander et/ou l'au moins un capteur de commutation (11, 12), auquel une action peut être attribuée, sont visualisés par des pictogrammes.

8. Procédé selon l'une des revendications 1 à 7, **caractérisé en ce que** l'unité de commande (2) peut être commutée en deux modes, un premier mode étant un mode de configuration et un deuxième mode étant un mode de fonctionnement, l'unité de commande (2) ayant des moyens d'affichage, par exemple une LED (13), avec lesquels le mode actuellement réglé est affiché.

9. Procédé selon l'une des revendications 1 à 8, **caractérisé en ce que** l'unité d'affichage (7) communique avec l'unité de commande (2) via une liaison radio.

10. Procédé selon l'une des revendications 1 à 9, **caractérisé en ce qu'**une connexion sécurisée est établie entre l'unité de commande (2) et le serveur central (10) pour récupérer l'au moins un jeu de données.

11. Procédé selon l'une des revendications 1 à 10, **caractérisé en ce que** le réseau d'installation du bâtiment (1) est un réseau IP.

12. Procédé selon la revendication 11, **caractérisé en ce que** les abonnés du réseau d'installation du bâtiment sont intégrés dans le réseau d'installation du bâtiment (1) via LAN ou via WLAN.

13. Procédé selon l'une des revendications 1 à 12, **caractérisé en ce qu'**un réseau de sous-données propriétaire est intégré dans le réseau d'installation du bâtiment (1), le réseau de sous-données propriétaire comprenant une station de base (5) et au moins un actionneur (6) réglable, la station de base (5) étant réglable avec des instructions API et la station de base (5) réglant l'actionneur (6).

14. Procédé selon les revendications 1 à 13, **caractérisé en ce que** l'unité de commande fait partie d'une station de base intégrée dans le réseau d'installation du bâtiment, qui est reliée à un capteur de commutation actionnable manuellement par l'intermédiaire d'un réseau radio propriétaire, un événement d'actionnement étant déclenché dans l'unité de commande lorsque le capteur est actionné.

15. Procédé selon l'une des revendications 1 à 13, **caractérisé en ce que** l'unité de commande (2) fait partie d'une unité d'opération (9) qui comporte au moins un capteur de commutation (8) actionnable manuellement, un événement d'actionnement étant déclenché dans l'unité de commande (2) lorsque le capteur de commutation est actionné.
